# EUROPEAN PATENT SPECIFICATION

(11) **EP 1 212 246 B1**
(45) Date of publication and mention of the grant of the patent: **06.10.2004**
(21) Application number: 00948433.8
(22) Date of filing: 22.06.2000
(51) Int. Cl.: B65F 5/00, E04F 17/10, B65G 53/06

(54) **A SYSTEM AND METHOD FOR REFUSE COLLECTION**
SYSTEM UND VERFAHREN ZUM SAMMELN VON MÜLL
SYSTEME ET PROCEDE DE COLLECTE DES ORDURES

(30) Priority: 16.07.1999 SE 9902719
(43) Date of publication of application: 12.06.2002
(73) Proprietor: Centralsug AB, 117 84 Stockholm (SE)
(72) Inventor: CEDERBORG, Per, S-181 47 Lidingö (SE); NORLENIUS, Kent, S-112 39 Stockholm (SE); JANKEVICS, Verner, S-165 71 Hässelby (SE)
(74) Representative: Hedman, Anders
(86) International application number: PCT/SE2000/001331
(87) International publication number: WO 2001/005683

(56) References cited:
- WO-A1-96/22238
- WO-A1-98/47788
- PATENT ABSTRACTS OF JAPAN & JP 08 282 803 A (SHIMIZU CORP) 29 October 1996

## Description

### TECHNICAL FIELD OF THE INVENTION

The present invention generally relates to refuse management and waste disposal, and more particularly to a vacuum refuse collection system, a method for controlled emptying of refuse in such a system, as well as a control system for controlling emptying of refuse.

### BACKGROUND OF THE INVENTION

Refuse collection systems operating at subatmospheric or vacuum pressure for transport of refuse by means of suction of air have been in use for many years and are well known to present an efficient, clean and convenient solution to the waste disposal problem. Such systems for suction transport of refuse, hereinafter simply referred to as vacuum refuse collection systems, have worked remarkably well with very few problems in smaller and medium-sized residential and office building areas. However, as vacuum refuse collection systems have been placed into service in larger and larger residential and office building areas with multi-story buildings of the high-rise type, the demands on the systems have increased considerably.

In particular, when refuse chutes are located in high-rise buildings, the amounts of refuse inserted into the chutes in a short period of time may be very large, and the amounts of refuse gathering in the refuse chutes frequently become too high between the periodic emptyings of the refuse chutes. In many instances, this problem can be solved by shortening the emptying cycle and empty the refuse chutes more frequently. However, in applications where a larger number of refuse chutes are connected to the system, it may not be possible to solve the problem in such a manner since the cycle time, even when reduced to its minimum, is still too long to secure satisfactory operation.

Attempts have been made to solve this capacity problem by providing two separate refuse chutes in each building. Not only did this solution increase the overall costs of the entire system, but the provision of the additional refuse chute did also require extra space.

The above problem is also discussed in our international application WO 98/47788, which discloses a refuse limitation valve provided above the discharge valve in the refuse chute to enable storage of refuse within the refuse chute above the limitation valve. This arrangement has turned out to be very efficient in many applications. However, since the refuse chute itself is used as a storage volume for refuse there is a risk, especially in high-rise buildings and in large systems, that the chute above the limitation valve is filled with refuse up to the first access port before the next emptying.

For this reason, different attempts have been made to provide so-called expanded storage volumes in at least some of the refuse chutes. The expanded storage volume, normally in the form of a container with substantially larger cross-section than the refuse chute, is provided at a position above the discharge valve, and allows temporary storage of a relatively high amounts of refuse. However, expanded storage volumes often require too much space and result in high total investment costs. In addition, since refuse normally is stored in the expanded storage volumes during longer periods of time, a more advanced ventilation system has to be used.

More recently, so-called level-controlled emptying has been introduced in order to optimize the performance of vacuum refuse collection systems. In level-controlled vacuum refuse collection systems, each refuse chute is provided with a level sensor for indicating the existence of refuse being piled up to a predetermined level in the refuse chute. When the refuse reaches the predetermined level, the level sensor sends a level-indication signal to the control system. At level-controlled emptying, the control system gives higher priority to refuse chutes with level indications, and empties such refuse chutes on a "first-come first-serve" basis. In this way, the control system may change the predefined structured emptying order normally used by the system and direct the collection of refuse to refuse chutes with level indications.

Conventional level-controlled emptying has turned out to be effective at certain load conditions in smaller systems, leading to improved system performance. In larger systems however, level-controlled emptying tends to have the exact opposite effect, leading to frequent jumps between different branches of the system in an uncontrolled manner and thus inefficient use of the available refuse collection resources. For example, at level-controlled emptying in a large and complex system, the emptying frequency, i.e. the number of discharge valve openings per time unit, can easily be reduced to less than 50% of the emptying frequency at normal predetermined structured emptying. Another disadvantage is that the "first-come first-serve" principle does not consider the consequences of the order in which the refuse chutes are emptied. For example, there is always the risk of overloading of a refuse chute in a critical area which is not first in the queue line.

The international application WO98/47788 discloses all features of the preambles of claims 1,14 and 26.

### RELATED ART

The international application WO 96/22238 discloses a plant for differentiated collection of refuse. The plant has a plurality of collection units, and each collection unit includes a plurality of containers, an arrangement for feeding different refuse to different containers and means for detecting data relevant to the amount of refuse within each container. The data detecting means may be in the form of a sensor for detecting the level of refuse in the container.

### SUMMARY OF THE INVENTION

The present invention overcomes these and other drawbacks of the prior art arrangements.

It is a general object of the present invention to provide an efficient and reliable vacuum refuse collection system as well as an improved method for controlled emptying of refuse in such a system.

In particular, it is desirable to optimize the vacuum refuse collection system with respect to reliability and operational costs, and to improve the emptying efficiency and minimize operational disturbances.

Another object of the invention is to provide an improved control system for implementing efficient emptying of refuse in a vacuum refuse collection system.

Yet another object of the invention is to improve the conventional level-controlled emptying of refuse in a vacuum refuse collection system such that satisfactory and efficient operation is secured in larger and more complex vacuum refuse collection systems. It is also desirable to secure satisfactory operation for different load conditions in the system.

These and other objects are met by the invention as defined by the accompanying patent claims.

The invention is mainly concerned with a vacuum refuse collection system in which refuse chutes are connected to a transport pipe system through respective discharge valves, and in which communication between a refuse chute and the transport pipe system is established by opening the discharge valve of the refuse chute.

The idea according to the invention is to partition discharge valves, and hence corresponding refuse chutes, into groups and perform controlled emptying of refuse by opening discharge valves and initiating collection of discharged refuse on a group basis. More particularly, the control system selects one group at a time for opening of discharge valves within the selected group. In this way, the utilization of the available resources in a vacuum refuse collection system is substantially improved, thus resulting in a much more efficient and reliable system.

The above solution has turned out to be particularly efficient for larger systems, especially in combination with level-controlled emptying. By performing level-controlled emptying on group level instead of on the level of individual discharge valves many of the disadvantages of conventional level-controlled emptying are avoided, while the advantages thereof still are obtained.

In group operation, the control system may take into account the total capacity of a whole group as well as the inflow of refuse to the group. When combining group operation and level-controlled emptying, each group of discharge valves is normally associated with a given emptying condition, which preferably is based on the number of corresponding refuse chutes that are filled with refuse up to a predetermined threshold level.

Preferably, each group is also associated with a priority value that represents the relative importance of collecting refuse from the group. The control system is then configured to operate based on the priority values of the groups such that the group having the highest priority value among the groups with valid emptying conditions is selected for emptying and collection of refuse.

A second aspect of the invention, related to level-controlled emptying, is based on providing each of a number of refuse chutes with a level indicator system that includes a first lower level indicator for indicating a lower level of refuse piled up in the chute and a second higher level indicator for indicating a second higher level of refuse piled up in the chute. At high load mode, the control system monitors the first lower level indicators and opens discharge valves in response to indicated first lower levels when the system is ready to collect the refuse therefrom. At low load mode, the second higher level indicators are monitored and discharge valves are opened in response to indicated second higher levels.

Alternatively, one or more level indicator systems may include an analog level indicator instead of two discrete-state level indicators, and the control system is then adapted to respond to the level information from the analog level indicators in a first predetermined manner at high load mode and in a second predetermined manner at low load mode in the vacuum refuse collection system.

The single predefined level used in conventional level-controlled emptying may be too high to prevent overloading of refuse chutes at high load in the system, whereas at low load in the system, the predefined level may be too low such that refuse chutes that are far from full are scheduled for emptying. By using two different levels in the manner suggested by the invention, it is possible to obtain a good trade-off between the risk for overloading refuse chutes and the fact that it is optimal to empty refuse chutes that are full or nearly full.

This second aspect of the invention is applicable to groups of discharge valves.

Other advantages offered by the present invention will be appreciated upon reading of the below description of the embodiments of the invention.

### BRIEF DESCRIPTION OF THE DRAWINGS

The invention, together with further objects and advantages thereof, will be best understood by reference to the following description taken together with the accompanying drawings, in which:
Fig. 1, is a schematic drawing illustrating an example of a vacuum refuse collection system;
Fig. 2 illustrates a schematic logical view of an illustrative vacuum refuse collection system according to the invention;
Fig. 3 is a schematic diagram of a computer-implemented control system according to a preferred embodiment of the invention; and
Fig. 4 is a schematic drawing of an illustrative refuse chute having two level indicators.

### DETAILED DESCRIPTION OF EMBODIMENTS OF THE INVENTION

Throughout the drawings, the same reference characters will be used for corresponding or similar elements.

In order to avoid misconceptions, it should be clarified that the term 'refuse' not only includes what traditionally is denoted as 'household refuse' or 'household garbage' but includes all fractions within the field of waste disposal such as paper, clothes, laundry and packages.

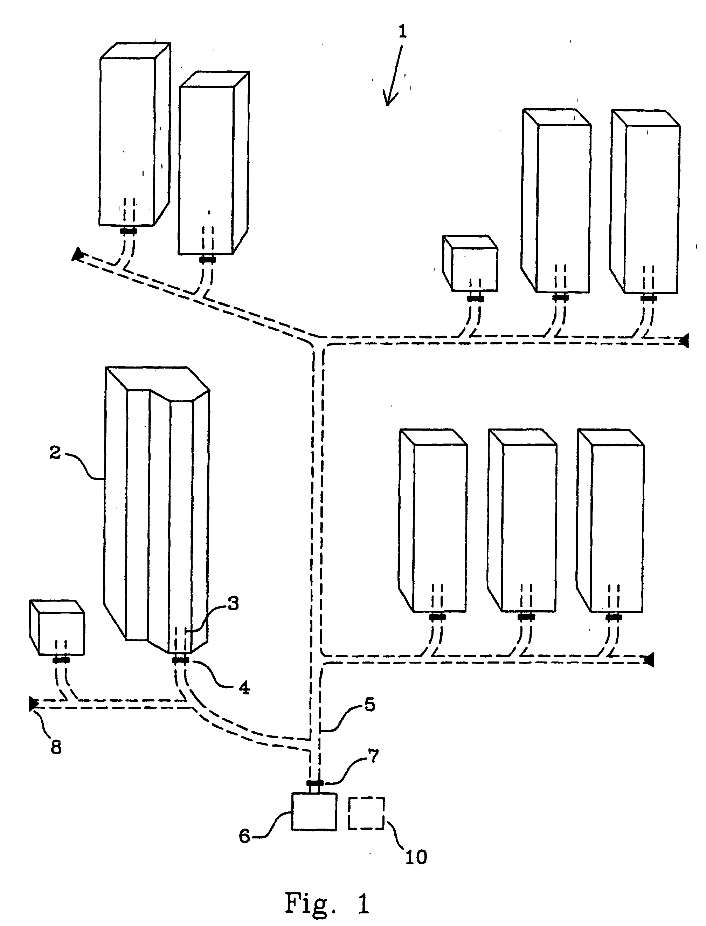

For a better understanding of the invention, a general survey of an illustrative vacuum refuse collection system will now be made with reference to Fig. 1.

### System overview

Fig. 1 is a schematic drawing illustrating an example of a vacuum refuse collection system. As an example, assume that the vacuum refuse collection system 1 is installed in a residential and/or business area having a number of buildings. Each building 2 is installed with a refuse chute 3, of which only the lower part is illustrated. In this particular example, the refuse chutes are vertical chutes extending vertically through the buildings, and each chute normally has several access ports (not shown). Each refuse chute is equipped with an openable and closable discharge valve 4, preferably positioned in the basement of the building. When opened the discharge valve 4 establishes communication between the chute 3 and an underground transport pipe 5 for discharging the refuse gathered upon the valve into the transport pipe. When closed the discharge valve 4 blocks the lower end of the refuse chute to provide a seal between the chute and the transport pipe 5.

The vacuum refuse collection system normally includes a number of transport pipes 5 which form an underground transport pipe system in which refuse is transported to a central refuse collection station 6 by means of suction of air. The transport pipe system is illustrated as having a main pipe to which a number of branches are connected. It should though be understood that the invention is not limited thereto, and that other configurations of the transport pipe system are feasible as well.

Each branch in the system has an air inlet valve 8 at the end of the branch. When the main valve 7 at the central refuse collection station 6 is opened, the transport pipe system or appropriate parts thereof is exposed to subatmospheric pressure or vacuum pressure, and when the air inlet valve 8 of a particular branch is opened the air needed for transporting the refuse gathered in the branch transport pipe 5 enters the system and transports the refuse to the central station 6. Sectioning valves (not shown) are normally used to seal different sections of the transport pipe system from each other to ensure sufficient pressure in individual sections for effective suction transport. Furthermore, the vacuum refuse collection system comprises a control system 10 for controlled emptying of refuse in the system. More particularly, the control system controls the emptying of refuse from the refuse chutes to the transport pipe system and the suction transport of refuse from different branches of the transport pipe system to the central collection station by controlling the discharge valves, air inlet valves, sectioning valves and main valve of the system according to accepted control technology.

The invention is not concerned with the specific design of the discharge valves, air inlet valves, sectioning valves and main valves, which are all well known in the art and may be of any conventional type used in vacuum refuse collection systems. In the same manner, the central refuse collection station may be any conventional station known to the art. In general, however, once the refuse has been transported to the central station, the refuse is compacted at the central station and stored in one or more containers.

### Problem analysis of conventional technique

Different attempts have been made to solve the general capacity problem encountered when vacuum refuse collection systems are placed into service in larger and more complex systems with high-rise buildings, as described above. Level-controlled emptying has been regarded as a promising approach to optimize the performance of refuse collection systems. In larger systems however conventional level-controlled emptying may often result in inefficient use of the available resources.

A careful analysis of conventional level-controlled emptying lead the inventors to the conclusion that it is the required suction time, also referred to as post-suction time, for transport of refuse to the central collection station in combination with frequent jumping between branches in an uncontrolled manner and the fact that normally refuse from just a single refuse chute in each branch is transported to the collection station that makes conventional level-controlled emptying inappropriate for larger and more complex refuse collection systems. Conventionally, when the control system receives a level-indication signal for a refuse chute in one branch of the transport pipe system, the control system orders discharge of refuse from the chute and suction transport to the central station. The time period required for the suction transport from the chute to the central station is referred to as post-suction time, and during this period of time the system is occupied and suction transport from other branches is put on hold. Next, when a level-indication signal is received from a refuse chute in another branch, the control system orders discharge of refuse and suction transport from that chute, requiring another period of post-suction. In this way, the control system may jump between branches with very little refuse actually being collected to the central station. In addition, the "first-come first-serve" principle does not consider the consequences of the order in which the refuse chutes are emptied.

### Problem solution - group operation

The general idea according to the invention is to partition discharge, valves, and hence corresponding refuse chutes, into groups and perform controlled emptying of refuse by opening discharge valves and initiating collection of refuse in one group at a time. This solution has turned out to be efficient in its own right, but particularly efficient in combination with level-controlled emptying. In the latter case, level-controlled emptying is applied on group level instead of on the level of individual discharge valves. By opening discharge valves on a group basis, refuse from a suitable number of refuse chutes within a group of refuse chutes is gathered and transported collectively to the central station. In this way the utilization of the available resources in the vacuum refuse collection system is substantially improved. In addition, the total inflow of refuse to a complete group as well as the total capacity of the group may be taken into account in the controlled emptying of refuse in the system.

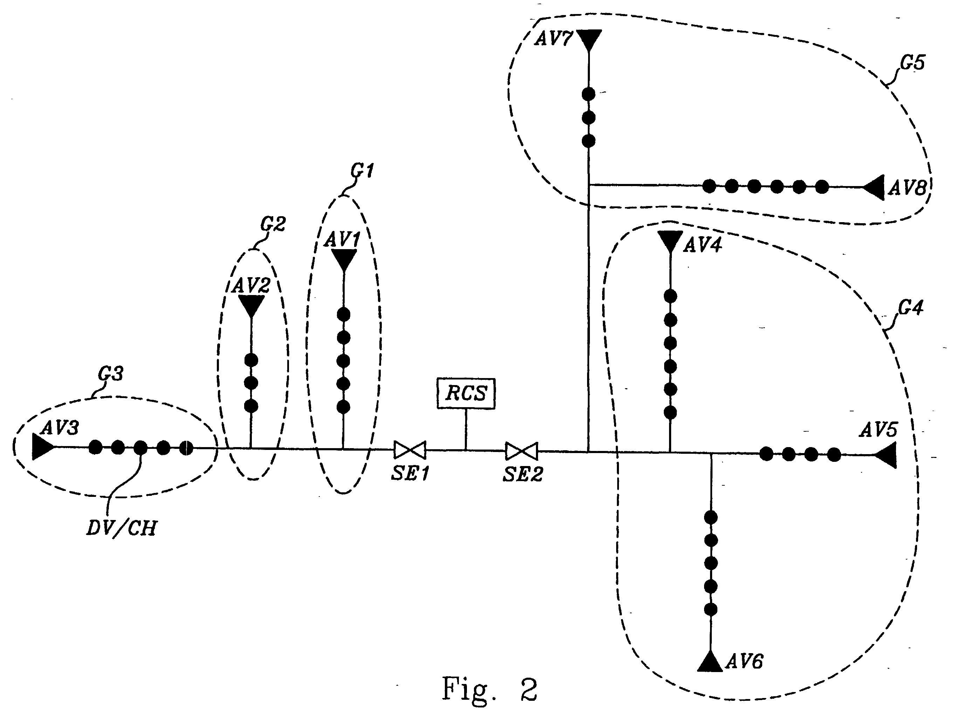

Fig. 2 illustrates a schematic logical view of an illustrative vacuum refuse collection system according to the invention. The logical view of Fig. 2 includes representations of a central refuse collection station RCS, a transport pipe system in the form of a network of transport pipes, discharge valves/refuse chutes DV/CH, sectioning valves SE1-SE2 and air inlet valves AV1-AV8.

As shown in Fig. 2, the discharge valves are partitioned into groups G1-G5. However, it should be understood that the group partitioning shown in Fig. 2 is merely an example, and that other ways of partitioning discharge valves into groups are feasible as well. The groups are generally defined in dependence on the structure of the vacuum refuse collection system and the particular requirements that are being put on the system.

In the following, the invention will be described with reference to a preferred embodiment of the invention which incorporates software-implemented functions for group operation and system control.

The refuse collection system is preferably controlled by a computer-implemented control system, which has functions for monitoring and controlling the refuse collection system.

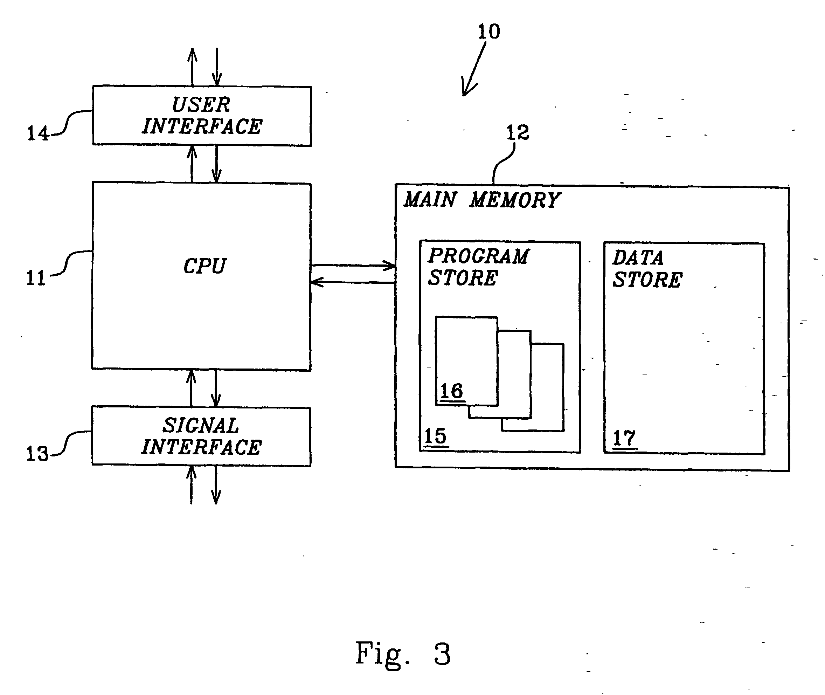

Fig. 3 is a schematic drawing of a computer-implemented control system according to a preferred embodiment of the invention. The control system basically comprises a computer or processor system in which one or more computer programs are being executed to perform the functions for monitoring and controlling the refuse collection system. The computer control system 10 includes a CPU 11 or equivalent, a main memory 12, a conventional signal interface 13 and a conventional user interface 14. The main memory 12 has a program store 15 for computer programs 16 and a data store 17 for data. The control system 10 is connected to the other components of the refuse collection system through conventional communication links and the control system utilizes the signal interface 13 for receiving signal information from the refuse collection system and for sending control signals to discharge valves, air inlet valves, sectioning valves and the main valve of the refuse collection system.

Preferably, an object-oriented programming language such as Java, C, C++ or equivalent is used to implement the group operation and system control functions.

Normally, the control system 10 includes the following functions:
- Group definition functions
- Group selection functions
- emptying conditions (optional)
- priorities (optional)
- System control functions including discharge valve control and refuse suction control.

The groups are normally configured by the system administrator in a special group definition menu. In the group definition menu, the administrator defines which air inlet valves and which discharge valves that belong to which groups. An example of a group definition menu related to Fig. 2 is given in Table I below.

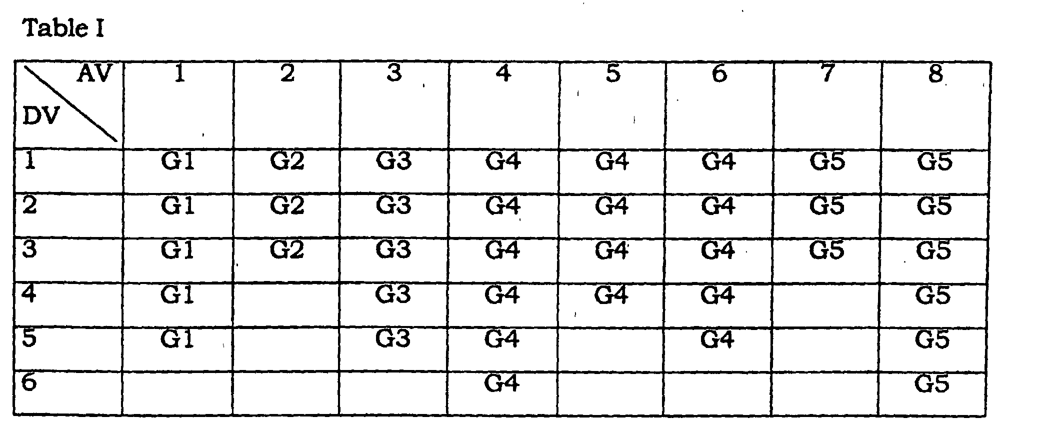

In the example given in Table I above, it can be seen that the following groups have been defined:
- All DVs on AV1 belong to group G 1.
- All DVs on AV2 belong to group G2.
- All DVs on AV3 belong to group G3.
- All DVs on AV4-6 belong to group G4.
- All DVs on AV7-8 belong to group G5.

Preferably, the control system may operate in different modes and perform structured emptying as well as level-controlled emptying.

*Structured emptying*: The control system goes through the groups one by one in a predetermined order. Alternatively, for example when shutting down the system at the end of a day, the group operation may be disabled and instead all chutes and transport pipes are emptied in a structured and predetermined order.

*Level-controlled emptying:* The control system selects a group for emptying of refuse based on signal information representative of the level of refuse from level indicators or level sensors in the vacuum refuse collection system. This normally requires the use of emptying conditions, a predetermined emptying condition being given for each group. Preferably, the emptying condition for at least one group is based on the number of refuse chutes in the group that are filled with refuse at least up to a predetermined threshold level. Typically, each , group is associated with such an emptying condition. It should though be understood that other types of emptying conditions can be used.

In this context it has turned out to be advantageous to associate each group with a priority value that represents the relative importance of emptying refuse from the group.

The emptying conditions and the priority values are normally configured by the system administrator in an emptying condition and priority menu, an example of which is given in Table II below.

**Table II**

| Group | G1 | G2 | G3 | G4 | G5 |
|---|---|---|---|---|---|
| Priority value | 0.30 | 0.30 | 0.30 | 0.20 | 0.20 |
| Level emptying condition | 1 | 2 | 1 | 1 | 1 |

The priority value denotes the relative importance of the group, and in Table II the priority value is a real number between 0 and 1. The priority value for each group is normally determined by the system administrator based on storage capacity in the refuse chutes of the group, and measured or presumed inflow of refuse to the group. Other factors such as sensitivity to overload and service availability may be considered in setting the priority value for a group.

The level emptying condition indicates the number of level indications needed before scheduling the group for emptying of refuse.

When using emptying conditions, it is important that an emptying order for those groups that have valid emptying conditions is established according to some criteria. The emptying order is preferably determined in an adaptive manner and hence updated as and when appropriate; e.g. each time an additional group gets a valid emptying condition or at regular time intervals.

If the priority function is disabled, groups with valid emptying conditions are preferably scheduled for emptying of refuse in a predetermined structured order.

If the priority function is enabled, the group having the highest priority value among the groups with valid emptying conditions is selected for emptying and collection of refuse. If several groups have the same priority value, one of the groups is selected according to a predetermined group order defined in a special group order list, an example of which is given in Table III below.

**Table III**

| | |
|---|---|
| Group order list | G1, G3, G2, G4, G5 |

The main task of the priority function is to determine which group among a number of groups having valid emptying conditions that should be selected first for emptying of refuse. A variation of this involves the use of an optimization algorithm, which arranges groups with valid emptying conditions in order for emptying so as to optimize the operation of the refuse collection system with respect to e.g. run-time. The emptying order obtained from the optimization algorithm may then be modified based on an analysis of the consequences using the obtained emptying order. For example, although it might be better to select a given group for emptying before another group with respect to the overall run-time, the risk of overload for the other group could be an argument for changing the emptying order and put that group first in line for emptying.

Although groups are selected for emptying rather than individual discharge valves, it is not necessary to open all discharge valves of a selected group. In fact, it may be advantageous to open only those discharge valves, within a group, that are associated with refuse chutes filled with refuse at least up to some given threshold level, as will be exemplified later.

Discharge valves within a selected group are preferably opened in a structured order one by one according to a predefined sequence. By this technique level-controlled emptying and structured emptying (within the selected group) can be combined. It should though be understood that it is not necessary to open all discharge valves in a selected group.

It is also possible for the administrator to associate the groups with different fractions in a special fraction menu, an example of which is given in Table IV below.

**Table IV**

| Group | Fraction |
|---|---|
| G1 | Household refuse (R) |
| G2 | Household refuse (R) |
| G3 | Household refuse (R) |
| G4 | Paper (P) |
| G5 | Paper (P) |

### Modified post-suction time - "suction time between groups"

In order to further optimize the system performance, a feature denoted "suction time between groups" is used in controlling the suction of refuse in the transport pipe system such that refuse from a first group is transported, in the direction towards the collection station, just passed the point at which the branch or branches of a second group connects to one of the branches of the first group or, if there are discharge valves belonging to the second group downstream of the connection point, just passed those discharge valves of the second group that are closest to the collection station. Subsequently, when refuse from the second group is to be collected, the refuse from the first group is transported along with the refuse of the second group towards the collection station. In other words, refuse from a group is never transported all the way to the central vacuum station unless necessary. In this way, valuable post-suction time is saved. The suction times between groups are configured by the system administrator based on knowledge of the structure and dimensions of the transport pipe system in a special suction-time-between-groups menu, an example of which is given in Table V below. The suction times between groups are measured in seconds and given with a safety margin.

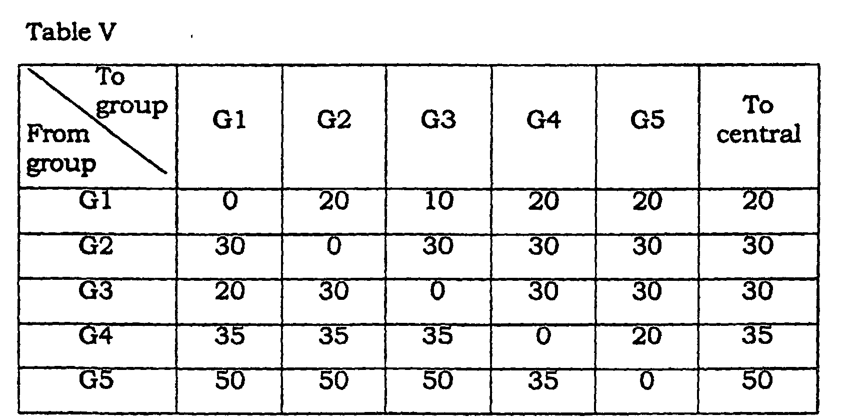

If the suction time between groups is equal to the suction time to the central station, the refuse is directly suction-transported all the way to the central station.

### Improved level-controlled emptying

A further improvement of the conventional level-controlled emptying is based on the understanding of the operation of the refuse collection system under different load conditions.

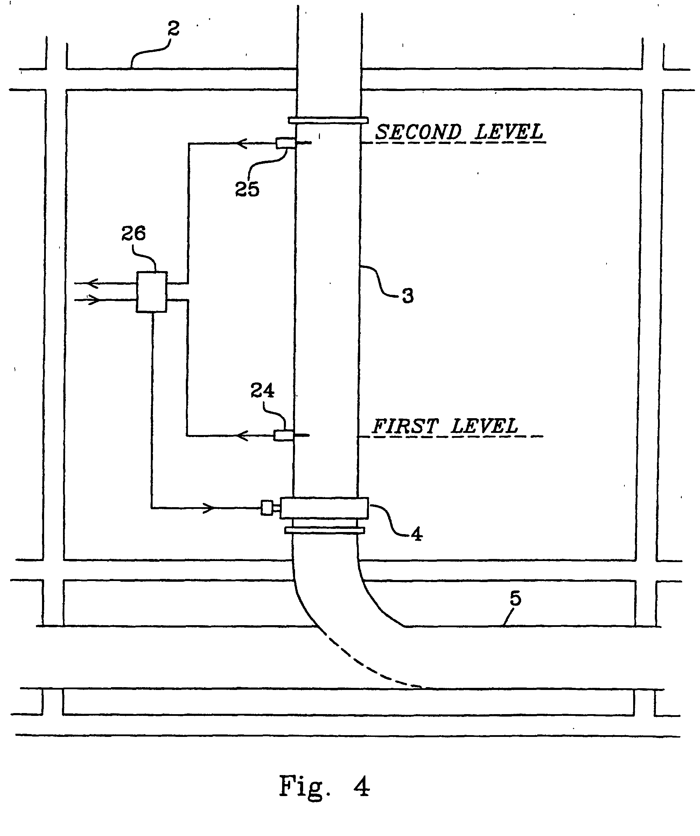

For a better understanding, reference will now be made to Fig. 4, which illustrates an example of a refuse chute installed in a building. The refuse chute 3 is installed in a building 2 in a conventional manner and is equipped with an openable and closable discharge valve 4. The discharge valve 4 is preferably, positioned in the basement of the building and is used for establishing communication between the refuse chute 3 and an underground transport pipe 5. Furthermore, the refuse chute 3 has a level indicator system, which includes two or more level indicators 24, 25 positioned at different levels in refuse chute 3. The level indicators are normally positioned in the chute wall or in the vicinity thereof. A first lower level indicator 24 is positioned a first distance above the discharge valve for generating signal information representative of the existence of refuse piled up to a lower level in the refuse chute, and a second higher level indicator 25 is positioned at a higher distance above the discharge valve for generating signal information representative of the existence of refuse piled up to a higher level in the refuse chute. Preferably, the second higher level indicator is positioned close to the upper floor disposal inlets.

Any conventional type of level sensor capable of sensing the continued presence of refuse may be employed by the invention, as long as the sensor does not interfere with the normal operation of the refuse chute. Examples of level indicators are:
- Mechanical level sensors (for example of the type having a spring biased finger extending into the chute);
- Optical level sensors (for example photo-cell based level sensors); and
- Ultrasonic sensors.

The signal information generated by the level indicators is transferred directly or via a distributed control unit 26 to the control system, and the control system is responsive to signal information from level indicator systems in a number of refuse chutes in the refuse collection system for performing controlled emptying of refuse. The distributed control unit 26 may also be used to forward control signals from the control system to the discharge valve 4.

The control system may operate in different modes. It is apparent that as the control system operates in a particular control mode, it causes the refuse collection system to operate in a corresponding refuse collection mode. A time schedule menu is used by the administrator to configure when the different modes should be allowed according to presumed disposal patterns and volumes during a day. An example of such a time schedule menu is given below in Table VI.

**Table VI**

| Start | Stop | Mode | Priority | Day | Fraction |
|---|---|---|---|---|---|
| 07.00 | 10.00 | High load mode | - | All days | All |
| 10.00 | 17.00 | Low load mode | Disabled | All days | P |
| 17.00 | 23.00 | High load mode | Enabled | All days | R |
| 23.00 | | Structured mode | - | All days | R |

In this particular example, three operation modes are used: low load mode, high load mode and structured emptying mode. As can be seen, the refuse collection system operates at low load mode and high load mode during different periods of the day. A final structured collection of refuse from all refuse chutes and pipes in the system is performed at 23.00 (11 p.m.). After that the refuse collection system is stopped and shut down during the night.

Naturally, the time scheduling is easily changed for performance optimization or for adapting the system to changed refuse disposal patterns.

The idea according to the invention is to use the lower level as a threshold level for level-controlled emptying at high load mode, and the higher level as a threshold level at low load mode. At high load mode, the control system monitors the first lower level indicators and opens discharge valves in response to indicated lower levels when the system is ready to collect the refuse therefrom. At low load mode, the second higher level indicators are monitored and discharge valves are opened in response to indicated higher levels.

By appropriately setting the above two levels, it is possible to obtain a good trade-off between the risk for overloading refuse chutes and the risk for emptying refuse chutes that are almost empty. The levels need not be the same in all refuse chutes. In fact, it might be beneficial to adapt the levels to the disposal patterns of the particular area in which the refuse chute is situated.
In the foregoing, the level indicators have been described as discrete-state level indicators that do not indicate the actual "analog" level of refuse in the system. Alternatively, however, the level indicator systems are provided as analog level indicators, for example as ultrasonic sensors. In this case, the control system still uses two discrete levels and responds to the signal information from the analog level indicators in substantially the same manner as described above. At high load mode, the control system responds to signal information representative of refuse being piled up at least to the lower level in a refuse chute by opening the corresponding discharge valve as soon as possible. At low load mode, the control system responds to signal information representative of refuse being piled up at least to the higher level in a refuse chute by opening the corresponding discharge valve.

The above improved level controlled emptying is applicable on group level.

When applied on group level, the following principles are preferably used:
- At high load mode, each group has an emptying condition based on the number of refuse chutes that are filled with refuse up to the lower level;
- At low load mode, each group has an emptying condition based on the number of refuse chutes that are filled with refuse up to the higher level; and
- In each load mode, only discharge valves with at least lower-level indications are opened.

Level-controlled emptying based on the above scheme in combination with group operation has turned out to be particularly efficient in large and complex refuse collection systems.

In the following, an illustrative example of group operation and system control, incorporating high-load level-controlled emptying and priority functions, will be described with reference to Fig. 2 and Tables I-VI given above.

### Example

High-load level-controlled emptying is started at 17:00.

| System states at 17:00 | | | | | |
|---|---|---|---|---|---|
| Groups: | G1 | G2 | G3 | G4 | G5 |
| Current priority | 0.30 | 0.30 | 0.30 | 0.20 | 0.20 |
| Number of levels | 0 | 3 | 1 | 0 | 1 |
| Valid emptying condition | No | Yes | Yes | No | Yes |

Groups G2, G3 and G5 have valid emptying conditions. The control system starts the central vacuum station. It detects that groups G2 and G3 have the highest priority among G2, G3 and G5, and since both G2 and G3 belong to the fraction R, the system switches to fraction R. The group order list of Table III is consulted, and since G3 precedes G2 in the list, the emptying procedure for group G3 is started by opening the main valve, the sectioning valve SE1 and the air inlet valve AV3. Next, all DVs of group G3 with lower-level indications are opened, preferably in a structured order, by sending appropriate control signals to the DVs of group G3 with lower-level indications.

In order to ensure that all groups eventually will be emptied, the control system increases the priority factor for each non-selected group that has a valid emptying condition each time a group has been selected for emptying, and at the same time resets the priority factor of the selected group to the initial priority factor of the group. Therefore, the priority of G2 is increased by 0.30 (a factor of 1 times the initial priority factor of G2) to 0.60, and G5 is increased by 0.20 to 0.40.

| System states at 17:03 | | | | | |
|---|---|---|---|---|---|
| Groups | G1 | G2 | G3 | G4 | G5 |
| Current priority: | 0.30 | 0.60 | 0.30 | 0.20 | 0.40 |
| Number of levels | 0 | 3 | 0 | 0 | 1 |
| Valid emptying condition | No | Yes | No | No | Yes |

Groups G2 and G5 have valid emptying conditions. The control system detects that G2 has the highest priority of G2 and G5. Using Table V it can be seen that the suction time from group G3 to group G2 is 30 seconds. This means that the control system waits 30 seconds from the time when the last DV of group G3 has been emptied so that the refuse of G3 has been transported in the transport pipe system at least passed the chutes of G2. Subsequently, air inlet valve AV3 for group G3 is closed and the emptying procedure for group G2 is started. Air inlet valve AV2 is opened, and then all DVs of G2 with lower-level indications are opened in a structured order. The priority factor of G2 is reset to 0.30, and the priority factor of G5 is increased by 0.20 to 0.60.

| System states at 17:05 | | | | | |
|---|---|---|---|---|---|
| Groups | G1 | G2 | G3 | G4 | G5 |
| Current priority | 0.30 | 0.30 0.30 | | 0.20 | 0.60 |
| Number of levels | 0 | 0 | 1 | 0 | 1 |
| Valid emptying condition | No | No | Yes | No, | Yes |

Groups G3 and G5 have valid emptying conditions. The system detects that G5 (for fraction P) has the highest priority of G3 and G5. Now, the system waits 30 seconds, the suction time between G2 and the central (since G5 belongs to another fraction and to another section the refuse of groups G3 and G2 has to be collected before the system switches to fraction P). Subsequently, the system switches to fraction P (paper), and runs the emptying procedure for G5 by opening the sectioning valve SE2, the air inlet valves AV7 and AV8 in a structured order, and the corresponding discharge valves with lower-level indications. The priority factor of G5 is reset to 0.20, and the priority factor of G3 is increased by 0.30 to 0.60.

| System states at 17:09 | | | | | |
|---|---|---|---|---|---|
| Groups: | G1 | G2 | G3 | G4 | G5 |
| Current priority | 0.30 | 0.30 | 0.60 | 0.20 | 0.20 |
| Number of levels | 0 | 0 | 1 | 0 | 0 |
| Valid emptying condition | No | No | Yes | No | No |

Group G3 has a valid emptying condition. The system waits 50 seconds (the suction time between G5 and the central) since G3 belongs to another fraction R, and to another section. The system then switches back to fraction R, opens sectioning valve SE1 and runs the emptying procedure for group G3. The priority factor of G3 is reset to 0.30.

| System states at 17:12 | | | | | |
|---|---|---|---|---|---|
| Groups: | G1 | G2 | G3 | G4 | G5 |
| Current priority | 0.30 | 0.30 | 0.30 | 0.20 | 0.20 |
| Number of levels | 0 | 0 | 0 | 0 | 0 |
| Valid emptying condition | No | No | No | No | No |

No valid emptying conditions. The control system either starts structured emptying or goes into a standby state. In the latter case, the central is stopped after a while if no lower-level indications occur in the system.

The daily refuse emptying and collection processes can be refined whenever necessary, for example by changing settings in the tables given above.

The vacuum refuse collection system according to the invention is capable of handling larger amounts of refuse per refuse chute as well as a larger number of refuse chutes connected to the system. This makes the system especially appropriate for use in areas with high-rise buildings and with many buildings connected to the same system or in larger airport refuse systems. It should be understood that although customized for complex high load applications, the system according to the invention can be used in all kinds of ARCS (automatic refuse collection system) applications.

The embodiments described above are merely given as examples, and it should be understood that the present invention is not limited thereto.

## Claims

1. A vacuum refuse collection system comprising a refuse collection station (6, RCS), a transport pipe system (5) for transport of refuse to the collection station, a number of refuse chutes (3) connected to the transport pipe system (5) through respective discharge valves (4), and a control system (10) for controlling emptying of refuse from the refuse chutes to the transport pipe system and collection of discharged refuse to the refuse collection station, communication between a refuse chute and the transport pipe system being established by opening the discharge valve of the refuse chute,
**characterized in that** the control system (10) comprises means, operating on groups (G1-G5) of discharge valves, for selecting one group at a time to open discharge valves within the selected group and initiate collection of discharged refuse.

2. The vacuum refuse collection system according to claim 1,
**characterized in that** the group operating means operates based on emptying conditions for the groups (G1-G5) such that groups with valid emptying conditions are selectable for emptying of refuse, a predetermined emptying condition being given for each group.

3. The vacuum refuse collection system according to claim 2,
**characterized in that** the system further comprises a level indicator system (24, 25) in each of a number of refuse chutes for generating signal information representative of the level of refuse in the respective refuse chute, and the group operating means is responsive to the signal information from the level indicator systems (24, 25) for determining, for each group, if the emptying condition of the group is valid.

4. The vacuum refuse collection system according to claim 3,
**characterized in that** the emptying condition for each group is based on the number of refuse chutes that are filled with refuse at least up to a predetermined threshold level.

5. The vacuum refuse collection system according to claim 4,
**characterized in that** each level indicator system (24, 25) includes a first lower level indicator (24) for generating signal information representative of the existence of refuse piled up to a first lower level in the refuse chute, and a second higher level indicator (25) for generating signal information representative of the existence of refuse piled up to a second higher level in the refuse chute; and
the group operating means includes means for operating the refuse collection system in low load mode and high load mode, respectively, during predetermined periods of time, wherein the first lower level is utilized as the threshold level at high load mode, and the second higher level is utilized as the threshold level at low load mode.

6. The vacuum refuse collection system according to claim 5,
**characterized in that** the group operating means is configured to open only those discharge valves, within a selected group, that correspond to refuse chutes with lower level indications, said discharge valves being opened in a structured predetermined order.

7. The vacuum refuse collection system according to claim 2,
**characterized in that** the group operating means comprises means for adaptively determining an emptying order in which groups with valid emptying conditions are selected for emptying and collection of refuse.

8. The vacuum refuse collection system according to claim 2,
**characterized in that** the group operating means comprises means for associating each group with a priority value that represents the relative importance of collecting refuse from the group; and
the group operating means also operates based on the priority values of the groups such that the group having the highest priority value among the groups with valid emptying conditions is selected for emptying and collection of refuse.

9. The vacuum refuse collection system according to claim 8,
**characterized in that** the group operating means is configured to select, if more than one group has the highest priority value, one of these groups according to a predetermined group order.

10. The vacuum refuse collection system according to claim 8,
**characterized in that** the group operating means further comprises:
means for increasing, each time a group has been selected for emptying and collection of refuse, the priority value of each non-selected group that has a valid emptying condition; and
means for resetting the priority value of the selected group to the initial priority value associated with the group.

11. The vacuum refuse collection system according to claim 10,
**characterized in that** the increasing means increases the priority value of each non-selected group that has a valid emptying condition preferably by a constant value equal to the initial priority value associated with the group.

12. The vacuum refuse collection system according to claim 1,
**characterized in that** a group of discharge valves is defined by a set of discharge valves belonging to the same branch of the transport pipe system.

13. The vacuum refuse collection system according to claim 1,
**characterized in that** the transport pipe system includes a number of branches, and a first group of discharge valves is defined by discharge valves of one or more branches, and a second group of discharge valves is defined by discharge valves of one or more other branches, and the control system (10) comprises means for controlling the suction of refuse in the transport pipe system such that refuse from the first group is transported, in the direction towards the collection station (6, RCS), just passed the point at which the branch(es) of the second group connects to one of the branches of the first group or, if there are discharge valves belonging to the second group downstream of the connection point, just passed those discharge valves of the second group that are closest to the collection station (6, RCS), wherein the thus transported refuse from the first group subsequently is transported along with the refuse of the second group towards the collection station.

14. A method for controlled emptying of refuse from a number of refuse chutes (3) through respective discharge valves (4) into a transport pipe system (5) in a vacuum refuse collection system, communication between a refuse chute (3) and the transport pipe system (5) being established by opening the discharge valve (4) of the refuse chute,
**characterized by**:
partitioning discharge valves into groups (G1-G5) for the purpose of controlled emptying of refuse, at least one group including a plurality of discharge valves; and
performing the controlled emptying of refuse by opening discharge valves on a group basis.

15. The method according to claim 14,
**characterized in that** the step of performing the controlled emptying of refuse is based on initiating opening of discharge valves and collection of discharged refuse in one group at a time.

16. The method according to claim 14,
**characterized by** assigning, to each group, a predetermined emptying condition, and selecting a group for emptying from those groups that have valid emptying conditions.

17. The method according to claim 16,
**characterized in that** the selecting step is performed according to a predetermined structured group order if no group has a valid emptying condition.

18. The method according to claim 16,
**characterized by**:
indicating, for each refuse chute, the level of refuse in the refuse chute; and
determining, for each group of discharge valves, whether the emptying condition for the group is valid or not in response to level indications, wherein the emptying condition for at least one group is based on the number of refuse chutes that are filled with refuse at least up to a predetermined threshold level.

19. The method according to claim 18,
**characterized in that** the vacuum refuse collection system is operated in low load mode and high load mode, respectively, during predetermined periods of time, and a first lower level is used as the threshold level at high load mode in the vacuum refuse collection system, and a second higher level is used as the threshold level at low load mode in the vacuum refuse collection system.

20. The method according to claim 19,
**characterized by** opening only those discharge valves, within a selected group, that correspond to refuse chutes with indications of refuse being piled up to at least the first lower level.

21. The method according to claim 16,
**characterized by** adaptively determining an emptying order for those groups that have valid emptying conditions, and selecting a group for emptying based on the adaptively determined emptying order.

22. The method according to claim 16,
**characterized by** associating each group with a priority value that represents the relative importance of emptying refuse from the group;
wherein the group having the highest priority value among the groups with valid emptying conditions is selected for emptying of refuse.

23. The method according to claim 22,
**characterized in that**, if more than one group has the highest priority value, one of these groups is selected according to a predetermined group order.

24. The method according to claim 22,
**characterized by**:
increasing, each time a group has been selected for emptying and collection of refuse, the priority value of each non-selected group that has a valid emptying condition; and
resetting the priority value of the selected group to the initial priority value associated with the group.

25. The method according to claim 14,
**characterized in that** the step of performing the controlled emptying of refuse comprises the step of selecting one group at a time based on the level of refuse in refuse chutes of the partitioned groups.

26. A control system for controlling the emptying of refuse from a number of refuse chutes (3) through respective discharge valves (4) into a transport pipe system (5) in a vacuum refuse collection system, communication between a refuse chute (3) and the transport pipe system (5) being established by opening the discharge valve (4) of the refuse chute,
**characterized in that** the control system (10) comprises:
- means for selecting discharge valves in groups, one group at a time; and
- means for sending control signals to discharge valves within a selected group to initiate opening of these discharge valves.

27. The control system according to claim 26,
**characterized in that** said control system further comprises means for assigning, to each group, a predetermined emptying condition that is based on the level of refuse within the respective group, wherein said selecting means is configured to select a group for emptying from those groups that have valid emptying conditions.

## Patentansprüche

1. Vakuum-Abfallsammelsystem, umfassend eine Abfallsammelstation (6, ASS), ein Transportröhrensystem (5) zum Transport von Abfall zu der Sammelstation, mehrere Abfallschächte (3), die mit dem Transportröhrensystem (5) durch entsprechende Auslassventile (4) verbunden sind, und ein Steuerungssystem (10) zum Steuern der Leerung des Abfalls aus den Abfallschächten in das Transportröhrensystem und Sammlung des ausgelassenen Abfalls in der Abfallsammelstation, wobei die Verbindung zwischen einem Abfallschacht und dem Transportröhrensystem hergestellt wird, indem das Auslassventil des Abfallschachts geöffnet wird, **dadurch gekennzeichnet, dass** das Steuerungssystem (10) ein Mittel umfasst, das Gruppen (G1-G5) von Auslassventilen betätigt, um jeweils eine Gruppe gleichzeitig auszuwählen, um Auslassventile innerhalb der ausgewählten Gruppe zu öffnen und die Sammlung des ausgelassenen Abfalls einzuleiten.

2. Vakuum-Abfallsammelsystem nach Anspruch 1, **dadurch gekennzeichnet, dass** das Gruppenbetätigungsmittel auf der Grundlage von Leerungsbedingungen für die Gruppen (G1-G5) betätigt wird, so dass Gruppen mit erfüllten Leerungsbedingungen für ein Leeren des Abfalls auszuwählen sind, wobei für jede Gruppe eine vorher bestimmte Leerungsbedingung gesetzt wird.

3. Vakuum-Abfallsammelsystem nach Anspruch 2, **dadurch gekennzeichnet, dass** das System weiterhin ein Füllhöhenanzeigesystem (24, 25) in jedem von mehreren Abfallschächten zum Erzeugen von Signalinformationen, die der Füllhöhe des Abfalls in dem jeweiligen Abfallschacht entsprechen, umfasst, und dass das Gruppenbetätigungsmittel auf die Signalinformationen von den Füllhöhenanzeigesystemen (24, 25) reagiert, um für jede Gruppe zu bestimmen, ob die Leerungsbedingung der Gruppe erfüllt ist.

4. Vakuum-Abfallsammelsystem nach Anspruch 3, **dadurch gekennzeichnet, dass** die Leerungsbedingung für jede Gruppe auf der Zahl der Abfallschächte beruht, die wenigstens bis zu einer vorher bestimmten Schwellenfüllhöhe mit Abfall gefüllt sind.

5. Vakuum-Abfallsammelsystem nach Anspruch 4, **dadurch gekennzeichnet, dass** jedes Füllhöhenanzeigesystem (24, 25) eine erste, niedrigere Füllhöhenanzeige (24) zum Erzeugen von Signalinformationen, die dem Vorhandensein von Abfall entsprechen, der bis zu einer ersten, niedrigeren Füllhöhe in dem Abfallschacht angehäuft ist, und eine zweite, höhere Füllhöhenanzeige (25) zum Erzeugen von Signalinformationen, die dem Vorhandensein von Abfall entsprechen, der bis zu einer zweiten, höheren Füllhöhe in dem Abfallschacht angehäuft ist, aufweist; und dass das Gruppenbetätigungsmittel Mittel zum Betätigen des Abfallsammelsystems im Niedriglast- bzw. im Hochlastmodus während vorher bestimmter Zeitabschnitte aufweist, wobei die erste, niedrigere Füllhöhe als Schwellenfüllhöhe im Hochlastmodus benutzt wird und die zweite, höhere Füllhöhe als Schwellenfüllhöhe im Niedriglastmodus benutzt wird.

6. Vakum-Abfallsammelsystem nach Anspruch 5, **dadurch gekennzeichnet, dass** das Gruppenbetätigungsmittel so konfiguriert ist, dass es nur diejenigen Auslassventile innerhalb einer ausgewählten Gruppe öffnet, die Abfallschächten mit niedrigerer Füllhöhenanzeige entsprechen, wobei die Auslassventile in einer strukturierten, vorher bestimmten Reihenfolge geöffnet werden.

7. Vakuum-Abfallsammelsystem nach Anspruch 2, **dadurch gekennzeichnet, dass** das Gruppenbetätigungsmittel Mittel aufweist, um adaptiv eine Leerungsreihenfolge zu bestimmen, in der Gruppen mit erfüllten Leerungsbedingungen für die Leerung und Sammlung des Abfalls ausgewählt werden.

8. Vakuum-Abfallsammelsystem nach Anspruch 2, **dadurch gekennzeichnet, dass** das Gruppenbetätigungsmittel Mittel aufweist, um jeder Gruppe einen Prioritätswert zuzuordnen, der der relativen Wichtigkeit der Sammlung des Abfalls aus der Gruppe entspricht; und dass das Gruppenbetätigungsmittel auch auf der Grundlage der Prioritätswerte der Gruppen so betätigt wird, dass die Gruppe, die unter den Gruppen mit erfüllten Leerungsbedingungen den höchsten Prioritätswert hat, für die Leerung und Sammlung des Abfalls ausgewählt wird.

9. Vakuum-Abfallsammelsystem nach Anspruch 8, **dadurch gekennzeichnet, dass** das Gruppenbetätigungsmittel so konfiguriert ist, dass es, wenn mehr als eine Gruppe den höchsten Prioritätswert hat, eine dieser Gruppen entsprechend einer vorher bestimmten Gruppenreihenfolge auswählt.

10. Vakuum-Abfallsammelsystem nach Anspruch 8, **dadurch gekennzeichnet, dass** das Gruppenbetätigungsmittel weiterhin umfasst:
- Mittel zum Erhöhen des Prioritätswerts jeder nicht ausgewählten Gruppe, bei der eine Leerungsbedingung erfüllt ist, jedes Mal, wenn eine Gruppe für eine Leerung und Sammlung des Abfalls ausgewählt wurde; und
- Mittel zum Rücksetzen des Prioritätswerts der ausgewählten Gruppe auf den anfänglichen Prioritätswert, der der Gruppe zugeordnet wurde.

11. Vakuum-Abfallsammelsystem nach Anspruch 10, **dadurch gekennzeichnet, dass** das Erhöhungsmittel den Prioritätswert jeder nicht ausgewählten Gruppe, die eine Leerungsbedingung erfüllt, vorzugsweise um einen konstanten Wert gleich dem anfänglichen Prioritätswert, der der Gruppe zugeordnet wurde, erhöht.

12. Vakuum-Abfallsammelsystem nach Anspruch 1, **dadurch gekennzeichnet, dass** eine Gruppe von Auslassventilen durch einen Satz von Auslassventilen gebildet wird, die demselben Zweig des Transportröhrensystems angehören.

13. Vakuum-Abfallsammelsystem nach Anspruch 1, **dadurch gekennzeichnet, dass** das Transportröhrensystem mehrere Zweige umfasst und eine erste Gruppe von Auslassventilen durch Auslassventile von einem oder mehreren Zweigen gebildet wird und eine zweite Gruppe von Auslassventilen durch Auslassventile von einem oder mehreren Zweigen gebildet wird und das Steuerungssystem (10) Mittel umfasst, um das Ansaugen von Abfall in dem Transportröhrensystem so zu steuern, dass Abfall aus der ersten Gruppe in Richtung der Sammelstation (6, ASS) direkt hinter den Punkt, an dem der Zweig/die Zweige der zweiten Gruppe mit einem der Zweige der ersten Gruppe verbunden sind, oder, falls Auslassventile zu der zweiten Gruppe stromabwärts des Verbindungspunkts gehören, direkt hinter diejenigen Auslassventile der zweiten Gruppe, die der Sammelstation (6, ASS) am nächsten liegen, transportiert wird, wobei der so transportierte Abfall aus der ersten Gruppe nachfolgend zusammen mit dem Abfall der zweiten Gruppe zu der Sammelstation transportiert wird.

14. Verfahren für eine gesteuerte Leerung von Abfall aus mehreren Abfallschächten (3) durch entsprechende Auslassventile (4) in ein Transportröhrensystem (5) in einem Vakuum-Abfallsammelsystem, wobei die Verbindung zwischen einem Abfallschacht (3) und dem Transportröhrensystem (5) hergestellt wird, indem das Auslassventil (4) des Abfallschachts geöffnet wird, **gekennzeichnet durch**:
- Unterteilung der Auslassventile in Gruppen (G1-G5) für eine gesteuerte Leerung des Abfalls, wobei wenigstens eine Gruppe eine Vielzahl von Auslassventilen aufweist; und
- Durchführung der gesteuerten Leerung des Abfalls **durch** gruppenweises Öffnen von Auslassventilen.

15. Verfahren nach Anspruch 14, **dadurch gekennzeichnet, dass** der Schritt der Durchführung der gesteuerten Leerung von Abfall auf der Initialisierung des Öffnens von Auslassventilen und der Sammlung von ausgelassenem Abfall in jeweils einer Gruppe gleichzeitig beruht.

16. Verfahren nach Anspruch 14, **dadurch gekennzeichnet, dass** jeder Gruppe eine vorher bestimmte Leerungsbedingung zugeordnet wird und eine Gruppe für eine Leerung aus denjenigen Gruppen ausgewählt wird, deren Leerungsbedingungen erfüllt sind.

17. Verfahren nach Anspruch 16, **dadurch gekennzeichnet, dass** der Auswahlschritt entsprechend einer vorher bestimmten strukturierten Gruppenreihenfolge durchgeführt wird, wenn bei keiner Gruppe eine Leerungsbedingung erfüllt ist.

18. Verfahren nach Anspruch 16, **gekennzeichnet durch**:
Anzeigen der Abfallfüllhöhe in dem Abfallschacht für jeden Abfallschacht, und
Bestimmen für jede Gruppe von Auslassventilen, ob die Leerungsbedingung für die Gruppe erfüllt ist oder nicht, als Reaktion auf Füllhöhenanzeigen, wobei die Leerungsbedingung für wenigstens eine Gruppe auf der Zahl der Abfallschächte beruht, die wenigstens bis zu einer vorher bestimmten Schwellenfüllhöhe mit Abfall gefüllt sind.

19. Verfahren nach Anspruch 18, **dadurch gekennzeichnet, dass** das Vakuum-Abfallsammelsystem während vorher bestimmter Zeitabschnitte im Niedriglast-Modus bzw. im Hochlast-Modus betrieben wird und eine erste, niedrigere Füllhöhe als Schwellenfüllhöhe beim Hochlastmodus in dem Vakuum-Abfallsammelsystem verwendet wird und eine zweite, höhere Füllhöhe als Schwellenfüllhöhe beim Niedriglast-Modus in dem Vakuum-Abfallsammelsystem verwendet wird.

20. Verfahren nach Anspruch 19, **dadurch gekennzeichnet, dass** nur diejenigen Auslassventile innerhalb einer ausgewählten Gruppe geöffnet werden, die Abfallschächten entsprechen, bei denen angezeigt wird, dass Abfall bis wenigstens zu der ersten, niedrigeren Füllhöhe angehäuft ist.

21. Verfahren nach Anspruch 16, **dadurch gekennzeichnet, dass** eine Leerungsreihenfolge adaptiv für diejenigen Gruppen bestimmt wird, deren Leerungsbedingungen erfüllt sind, und auf der Grundlage der adaptiv bestimmten Leerungsreihenfolge eine Gruppe für die Leerung ausgewählt wird.

22. Verfahren nach Anspruch 16, **dadurch gekennzeichnet, dass** jeder Gruppe ein Prioritätswert zugeordnet wird, der die relative Wichtigkeit der Leerung von Abfall aus der Gruppe repräsentiert; wobei die Gruppe, die unter den Gruppen mit erfüllten Leerungsbedingungen den höchsten Prioritätswert hat, für eine Leerung des Abfalls ausgewählt wird.

23. Verfahren nach Anspruch 22, **dadurch gekennzeichnet, dass**, wenn mehr als eine Gruppe den höchsten Prioritätswert hat, eine dieser Gruppen entsprechend einer vorher bestimmten Gruppenreihenfolge ausgewählt wird.

24. Verfahren nach Anspruch 22, **gekennzeichnet durch**:
Erhöhen des Prioritätswerts jeder nicht ausgewählten Gruppe, die eine Leerungsbedingung erfüllt, jedes Mal, wenn eine Gruppe für eine Leerung und
Sammlung des Abfalls ausgewählt wurde; und
Rücksetzen des Prioritätswerts der ausgewählten Gruppe auf den anfänglichen Prioritätswert, der der Gruppe zugeordnet wurde.

25. Verfahren nach Anspruch 14, **dadurch gekennzeichnet, dass** der Schritt der Durchführung der gesteuerten Leerung des Abfalls den Schritt umfasst, dass auf der Grundlage der Füllhöhe des Abfalls in Abfallschächten der unterteilten Gruppen jeweils eine Gruppe gleichzeitig ausgewählt wird.

26. Steuerungssystem zum Steuern der Leerung von Abfall aus mehreren Abfallschächten (3) durch entsprechende Auslassventile (4) in ein Transportröhrensystem (5) in einem Vakuum-Abfallsammelsystem, wobei die Verbindung zwischen einem Abfallschacht (3) und dem Transportröhrensystem (5) hergestellt wird, indem das Auslassventil (4) des Abfallschachts geöffnet wird, **dadurch gekennzeichnet, dass** das Steuerungssystem (10) aufweist:
- Mittel zum Auswählen von Auslassventilen in Gruppen, jeweils eine Gruppe gleichzeitig; und
- Mittel zum Senden von Steuerungssignalen an Auslassventile innerhalb einer ausgewählten Gruppe, um das Öffnen dieser Auslassventile zu initialisieren.

27. Steuerungssystem nach Anspruch 26, **dadurch gekennzeichnet, dass** das Steuerungssystem weiterhin Mittel umfasst, um jeder Gruppe eine vorher bestimmte Leerungsbedingung zuzuordnen, die auf der Füllhöhe des Abfalls innerhalb der entsprechenden Gruppe beruht, wobei das Auswahlmittel so konfiguriert ist, dass eine Gruppe für die Leerung aus denjenigen Gruppen ausgewählt wird, deren Leerungsbedingungen erfüllt sind.

## Revendications

1. Système de collecte d'ordures à dépression comprenant une station de collecte d'ordures (6, RCS), un système de canalisations de transport (5) pour le transport des ordures jusqu'à la station de collecte, un certain nombre de goulottes à ordures (3) raccordées au système de canalisations de transport (5) par l'intermédiaire de vannes respectives de déchargement (4), et un système de commande (10) pour commander le vidage des ordures à partir des goulottes à ordures jusqu'au système de canalisations de transport et la collecte des ordures déchargées dans la station de collecte des ordures, la communication entre une goulotte à ordures et le système de canalisations de transport étant établie par l'ouverture de la vanne de déchargement de la goulotte à ordures, **caractérisé en ce que** le système de commande (10) comprend des moyens, agissant sur des groupes (G1-G5) de vannes de déchargement, pour sélectionner un groupe à la fois pour ouvrir des vannes de déchargement dans le groupe sélectionné et déclencher la collecte d'ordures déchargées.

2. Système de collecte d'ordures à dépression selon la revendication 1, **caractérisé en ce que** le moyen d'actionnement des groupes fonctionne sur la base de conditions de vidage pour les groupes (G1-G5) de telle sorte que des groupes présentant des conditions de vidage valables peuvent être sélectionnés pour le vidage d'ordures, une condition de vidage prédéterminée étant fournie pour chaque groupe.

3. Système de collecte d'ordures à dépression selon la revendication 2, **caractérisé en ce que** le système comporte en outre un système indicateur de niveau (24, 25) situé dans chacun d'un certain nombre de goulottes à ordures pour générer une information de signal représentative du niveau d'ordures dans la goulotte à ordures respective, et les moyens d'actionnement de groupes sont sensibles à l'information de signal délivrée par les systèmes indicateurs de niveau (24, 25) pour déterminer, pour chaque groupe, si la condition de vidage du groupe est valable.

4. Système de collecte d'ordures à dépression selon la revendication 3, **caractérisé en ce que** la condition de vidage pour chaque groupe est basée sur le nombre de goulottes à ordures qui sont remplies avec des ordures au moins jusqu'à un niveau de seuil prédéterminé.

5. Système de collecte d'ordures à dépression selon la revendication 4, **caractérisé en ce que** chaque système indicateur de niveau (24, 25) inclut un premier indicateur de niveau inférieur (24) pour générer une information de signal représentative de l'existence d'ordures empilées jusqu'à un premier niveau inférieur dans la goulotte à ordures, et un second indicateur de niveau plus élevé (25) pour générer une information de signal représentative de l'existence d'ordures empilées jusqu'à un second niveau plus élevé dans la goulotte à ordures; et
les moyens d'actionnement de groupes comprennent des moyens pour actionner le système de collecte d'ordures respectivement dans un mode à faible charge et dans un mode à charge élevée, pendant des intervalles de temps prédéterminés, le premier niveau inférieur étant utilisé en tant que niveau de seuil dans un mode à charge élevée, et le second niveau supérieur étant utilisé en tant que niveau de seuil dans le mode à faible charge.

6. Système de collecte d'ordures à dépression selon la revendication 5, **caractérisé en ce que** les moyens d'actionnement de groupes sont configurés de manière à ouvrir, dans un groupe sélectionné, uniquement les vannes de déchargement, qui correspondent à des goulottes à ordures présentant des indications de niveau plus faible, lesdites vannes de déchargement étant ouvertes dans un ordre prédéterminé structuré.

7. Système de collecte d'ordures à dépression selon la revendication 2, **caractérisé en ce que** les moyens d'actionnement de groupes comprennent les moyens pour déterminer de façon adaptative un ordre de vidage, selon lequel des groupes présentant des conditions valables de vidage sont sélectionnés pour le vidage et la collecte des ordures.

8. Système de collecte d'ordures à dépression selon la revendication 2, **caractérisé en ce que** les moyens d'actionnement de groupes comprennent des moyens pour associer chaque groupe à une valeur de priorité qui représente l'importance relative de collecte d'ordures à partir du groupe; et
les moyens d'actionnement de groupes agissent également sur la base des valeurs de priorité des groupes de telle sorte que le groupe possédant la valeur de priorité la plus élevée parmi les groupes présentant des conditions valables de vidage est sélectionné pour le vidage et la collecte des ordures.

9. Système de collecte d'ordures à dépression selon la revendication 8, **caractérisé en ce que** les moyens d'actionnement de groupes sont configurés de manière à sélectionner, si plus d'un groupe possèdent la valeur de priorité la plus élevée, l'un de ces groupes en fonction d'un ordre de groupe prédéterminé.

10. Système de collecte d'ordures à dépression selon la revendication 8, **caractérisé en ce que** les moyens d'actionnement de groupes comprennent en outre:
des moyens pour accroître, chaque fois qu'un groupe a été sélectionné pour le vidage et la collecte d'ordures, la valeur de priorité de chaque groupe non sélectionné qui possède une condition valable de vidage; et
des moyens pour ramener la valeur de priorité du groupe sélectionné à la valeur de priorité initiale associé au groupe.

11. Système de collecte d'ordures à dépression selon la revendication 10, **caractérisé en ce que** les moyens d'accroissement augmentent la valeur de priorité de chaque groupe non sélectionné qui possède une condition valable de vidage, de préférence une valeur constante égale à la valeur de priorité initiale associée au groupe.

12. Système de collecte d'ordures à dépression selon la revendication 1, **caractérisé en ce qu'**un groupe de vannes de déchargement est défini pour l'ensemble de vannes de déchargement faisant partie de la même branche du système de canalisations de transport.

13. Système de collecte d'ordures à dépression selon la revendication 1, **caractérisé en ce que** le système de canalisations de transport comprend un certain nombre de branches, et un premier groupe de vannes de déchargement est défini par des vannes de déchargement d'une ou de plusieurs branches, et un second groupe de vannes de déchargement est défini par des vannes de déchargement d'une ou de plusieurs autres branches, et le système de commande (10) comprend des moyens pour commander l'aspiration d'ordures dans le système de canalisations de transport de telle sorte que les ordures provenant du premier groupe sont transportées, en direction de la station de collecte (6, RCS), juste après le franchissement du point au niveau duquel la ou les branches du second groupe se raccorde(nt) à l'une des branches du premier groupe ou, s'il existe des vannes de déchargement appartenant au second groupe en aval du point de raccordement, juste après le franchissement des vannes de déchargement du second groupe, qui sont les plus proches de la station de collecte (6, RCS), les ordures ainsi transportées à partir du premier groupe étant transportées ultérieurement conjointement avec les ordures du second groupe en direction de la station de collecte.

14. Procédé pour le vidage commandé d'ordures à partir d'un certain nombre de goulottes à ordures (3) par l'intermédiaire de vannes respectives de déchargement (4) dans un système de canalisation de transport (5) dans un système de collecte d'ordures à dépression, la communication entre une goulotte à ordures (3) et le système de canalisation de transport (5) étant établie moyennant l'ouverture de la vanne de déchargement (4) de la goulotte à ordures,
**caractérisé par**:
la répartition de vannes de déchargement en des groupes (G1-G5) pour réaliser le vidage commandé des ordures, au moins un groupe incluant une pluralité de vannes de déchargement; et
l'exécution du vidage commandé des ordures par ouverture de vannes de déchargement sur la base de groupes.

15. Procédé selon la revendication 14,
**caractérisé en ce que** l'étape d'exécution du vidage commandé d'ordures est basée sur le déclenchement de l'ouverture de vannes de déchargement et la collecte d'ordures déchargées dans un groupe à la fois.

16. Procédé selon la revendication 14,
**caractérisé par** l'affectation, à chaque groupe, d'une condition prédéterminée de vidage, et par la sélection d'un groupe pour le vidage parmi les groupes qui présentent des conditions valables de vidage.

17. Procédé selon la revendication 16,
**caractérisé en ce que** l'étape de sélection est exécutée conformément à un ordre des groupes structuré prédéterminé si aucun groupe ne présente une condition valable de vidage.

18. Procédé selon la revendication 16,
**caractérisé par**:
l'indication, pour chaque goulotte à ordures, du niveau d'ordures dans la goulotte à ordures; et
la détermination, pour chaque groupe de vannes de déchargement, du fait que la condition de vidage pour le groupe est valable ou non en réponse à des indications de niveau, la condition de vidage pour au moins un groupe étant basée sur le nombre de goulottes à ordures qui sont remplies avec des ordures au moins jusqu'à un niveau de seuil prédéterminé.

19. Procédé selon la revendication 18,
**caractérisé en ce que** le système de collecte d'ordures à dépression fonctionne respectivement dans un mode de charge faible et dans un mode à charge élevée, pendant des intervalles de temps prédéterminés, et un premier niveau inférieur est utilisé en tant que niveau de seuil pour un mode de charge élevée dans le système de collecte d'ordures à dépression, et un second niveau plus élevé est utilisé en tant que niveau de seuil dans un mode à faible charge dans le système de collecte d'ordures à dépression.

20. Procédé selon la revendication 19,
**caractérisé par** l'ouverture, à l'intérieur d'un groupe sélectionné, uniquement des vannes de déchargement qui correspondent à des goulottes à ordures présentant des indications du fait que des ordures sont empilées au moins jusqu'au premier niveau inférieur.

21. Procédé selon la revendication 16,
**caractérisé par** la détermination adaptative d'un ordre de vidage pour les groupes qui présentent des conditions valables de vidage, et sélection d'un groupe pour le vidage sur la base de l'ordre de vidage déterminé de façon adaptative.

22. Procédé selon la revendication 16,
**caractérisé par** l'association de chaque groupe à une valeur de priorité, qui représente l'importance relative du vidage d'ordures à partir du groupe;
le groupe possédant la valeur de priorité maximale parmi les groupes présentant des conditions de guidage valables étant sélectionné pour le vidage des ordures.

23. Procédé selon la revendication 22,
**caractérisé en ce que**, si plus d'un groupe possède la valeur de priorité maximale, l'un de ces groupes est sélectionné conformément à un ordre de groupe prédéterminé.

24. Procédé selon la revendication 22,
**caractérisé par**:
l'augmentation, chaque fois qu'un groupe a été sélectionné pour le vidage et la collecte d'ordures, de la valeur de priorité de chaque groupe non sélectionné qui possède une condition valable de vidage; et
la remise de la valeur de priorité du groupe sélectionné à la valeur de priorité initiale associé au groupe.

25. Procédé selon la revendication 14,
**caractérisé en ce que** l'étape d'exécution du vidage commandé des ordures comprend l'étape de sélection d'un groupe à la fois sur la base du niveau des ordures dans des goulottes à ordures des groupes séparés.

26. Système de commande pour commander le vidage d'ordures à partir d'un certain nombre de goulottes à ordures (3) au moyen de vannes respectives de déchargement (4) dans un système de canalisations de transport (5) dans un système de collecte d'ordures à dépression, la communication étant établie entre une goulotte à ordures (3) et le système de canalisation de transport (5) par l'ouverture de la vanne de déchargement (4) de la goulotte à ordures,
**caractérisé en ce que** le système de commande (10) comporte:
- des moyens pour sélectionner des vannes de déchargement dans des groupes, à raison d'un groupe à la fois, et
- des moyens pour envoyer des signaux de commande à des vannes de déchargement dans un groupe sélectionné pour déclencher l'ouverture de ces vannes de déchargement.

27. Système de commande selon la revendication 26, **caractérisé en ce que** ledit système de commande comprend en outre des moyens pour affecter, à chaque groupe, une condition de vidage prédéterminée, qui est basée sur le niveau des ordures dans le groupe respectif, lesdits moyens de sélection étant configurés de manière à sélectionner un groupe pour le vidage à partir des groupes qui comportent des conditions valables de vidage.
